Europäisches Patentamt

European Patent Office

Office européen des brevets

(11) Publication number: **0 105 707**
**B1**

## EUROPEAN PATENT SPECIFICATION

(45) Date of publication of patent specification: **11.03.87**

(51) Int. Cl.⁴: **G 06 F 15/20,** G 06 F 3/14

(21) Application number: **83305821.7**

(22) Date of filing: **28.09.83**

(54) **Apparatus for scaling fascimile image data.**

(30) Priority: **30.09.82 US 430228**

(43) Date of publication of application:
**18.04.84 Bulletin 84/16**

(45) Publication of the grant of the patent:
**11.03.87 Bulletin 87/11**

(84) Designated Contracting States:
**DE FR GB IT NL**

(56) References cited:
**EP-A-0 016 299**
**DE-A-2 835 689**
**JP-A-56 076 683**
**US-A-3 976 982**
**US-A-4 090 188**
**US-A-4 381 547**

(73) Proprietor: **International Business Machines Corporation**
**Old Orchard Road**
**Armonk, N.Y. 10504 (US)**

(72) Inventor: **Pearson, Kenneth Arnold**
**209 Hinsdale Street**
**Kingston New York 12401 (US)**
Inventor: **Zimmerman, Luther Lee**
**17 Holly Hills Drive**
**Woodstock New York 12498 (US)**

(74) Representative: **Richards, John Peter**
**IBM United Kingdom Limited Intellectual**
**Property Department Hursley Park**
**Winchester Hampshire SO21 2JN (GB)**

Courier Press, Leamington Spa, England.

## Description

This invention relates to an apparatus for converting image data of a first image field to data of a second image field having a reduced resolution.

Computer users of on-line displays frequently access image facsimile data which occurs in scanned lines. A large number of picture elements or pels, each comprising data representing the grey scale of a respective point in an image, are generated at regular time intervals depending on the sampling frequency used. The CCITT standard prescribes numbers of pels per inch suitable to produce adequate clarity. The pels are digital data specifying a particular grey scale of each point in the image, and each scan line forms one row of pels in a two-dimensional matrix. The individual pels of a plurality of successive scan lines form columns of pels, the columns and rows constituting a matrix of N rows and M columns. The matrix is stored in a memory and supplied to a user for display when required.

Displays and printers used in connection with large scale computer systems typically require image data which is comprised of a smaller number of pels derived from a larger image matrix containing more pels. The conversion process should reduce the matrix of pels from $N_1 \times M_1$ to $N_2 \times M_2$ with a minimum loss in picture detail.

The process of converting one matrix of image data to a second matrix of image data having a different resolution has in the past involved computation of a grey scale for each new pel with an algorithm-controlled processor. In one such algorithm the processor calculates the grey scale level of the new pel considering the contribution of grey scale level from the pels of the original matrix which constitute the four nearest neighbours to the new image pel as:

$$T_{(K,L)} =$$

$$S_{i,j} (1\text{-}dx) (1\text{-}dy) + S_{i,j+1} (dx) (1\text{-}dy) +$$

$$S_{i+1,j} (1\text{-}dx) (dy) + S_{i+1, j+1} (dx)\, dy$$

where dx, dy, are the distances of the new image pel $T_{(K,L)}$ to the upper left neighbour $S_{i,j}$ of the original matrix. $S_{i,j+1}$, $S_{i+1,j}$ and $S_{i+1, j+1}$ are the grey scale levels for the remaining neighbours of the new image pel.

The process of calculating each new pel grey scale level from the old image pel neighbours consumes considerable processor time. The image quality and speed of computation vary inversely, and the number of required computations may slow the processor beyond the point of acceptability.

Japanese Patent Specification 56—76683 discloses a process of deforming an original picture by changing the pitch of the picture elements, but this specification is generally concerned with more complex changes than mere reduction in resolution, for example, an increase in resolution and also geometrical deformation.

To achieve this, this prior specification requires a specific look-up table of weighting factors to be calculated in respect of each desired deformation, and determines the grey scale level of each new image pel by multiplying the relevant weighting factor by the grey scale levels of the nearest neighbours to the new image pel.

Consequently, due to the need to calculate a different table of weighting factors for each desired deformation, the prior specification requires at least (M × N) calculations be performed for each image conversion, where M and N are the number of pels in the new image in each orthogonal direction.

However, by limiting the deformation to a reduction of resolution, we have found that a simple technique for calculating the grey scale levels of the new image pels can be achieved.

Accordingly, the present invention provides apparatus for converting first image data, comprising a matrix of rows and columns of image pels each comprising grey scale data of a corresponding point on an original image, to a matrix of second image data of reduced resolution, the apparatus comprising: means for forming a first scale factor corresponding to the ratio of the resolution of the first image to that of the second image in the row direction, means for forming a second scale factor corresponding to the ratio of the resolution of the first image to that of the second image in the column direction, means for multiplying the row coordinate of each successive column of second image pels by the first scale factor to give, in each case a whole number TAB# and a fractional remainder ΔX, means for storing each successive TAB# and a ΔX, means for multiplying the column coordinate of each successive row of second image pels by the second scale factor to give, in each case, a whole number NEXT PAIR and a fractional remainder ΔY, means for storing each successive NEXT PAIR and ΔY, means responsive to the stored values of TAB#, ΔX and NEXT PAIR, ΔY, to identify, for each different combination of TAB# and NEXT PAIR, a set of four first image pels which constitute the nearest neighbours to a respective second image pel, and a look-up table which is accessed in respect of each set of four first image pels so identified at a location determined by the combination of grey scale values of the four first image pels and by the remainders ΔX and ΔY associated with the whole numbers TAB# and NEXT PAIR from which the four first image pels were identified, such location having stored therein the grey scale level of the respective second image pel.

In contrast to the Japanese patent specification mentioned above, the look-up table according to the invention directly defines the grey scale level for each input pel. This table is generic to all scale factors and only needs to be calculated once, and is then usable repeatedly for any desired scale factor within the limits of the system. Thus, the present invention requires only (M + N) calculations as a consequence of the TAB and NEXT PAIR calculations which, for any given conversion, are performed once for each complete column and once for each complete row.

German Patent Specification DE—A1—2 835 689 is concerned especially with a change in resolution (including reduced resolution) but with outline coded data. However, outline coded data is not used in the subject matter of the present invention.

In the embodiment of the invention, two simplifications are imposed upon the preceding calculation. Grey scale levels of the original image are restricted to 0 and 1, and the distances dx, dy are rounded to the nearest $\frac{1}{8}$. The four original image pels which form the nearest neighbours of each new image pel are identified, as well as the position of the new pel with respect to each such neighbour. A look-up table is provided which is addressed according to the grey scale of each neighbour pel and the position of the new pel within its respective four-pel neighbourhood. By grey scale, it is intended to cover the situation wherein each image pel is represented by one of two grey scale levels only, which is either 1 or 0. The look-up table comprises a memory organised in planes, each plane containing addressable rows and columns of storage cells. Each plane corresponds to a respective one of the plurality of possible grey scale combinations of each four-pel neighbourhood, and each storage cell within a given plane corresponds to a respective one of the plurality of possible positions of the new pel with respect to its old image neighbours. Thus, by addressing the plane corresponding to the particular old pel grey scale levels within the neighbourhood of the new pel, and further addressing the storage cell within that neighbourhood corresponding to the position of the new pel, the grey scale of the new pel is determined.

An embodiment of the invention will now be described, by way of example, with reference to the accompanying drawings, in which:

Figure 1 is illustrative of an image matrix of $N_2 \times M_2$ pels, superimposed on a higher resolution $N_1 \times M_1$ matrix containing more pels.

Figure 2 is illustrative of the relationship of a neighbourhood of four original image pels with respect to a new pel of a reduced resolution image having fewer pels.

Figure 3A is illustrative of a plane of a look-up table containing grey scale data for a new image pel.

Figure 3B is illustrative of a plane of a simplified look-up table containing grey scale data for a new image pel.

Figure 3C illustrates the organisation in planes of a memory serving as a look-up table for new image pel grey scale data.

Figure 4 is a block diagram of an apparatus embodying the invention.

Figure 5 is a detailed block diagram of the conversion hardware of Figure 4.

Figure 6a—6d are flow charts illustrating the method by which image data is converted from a first to a second resolution using the apparatus of Figures 4 and 5.

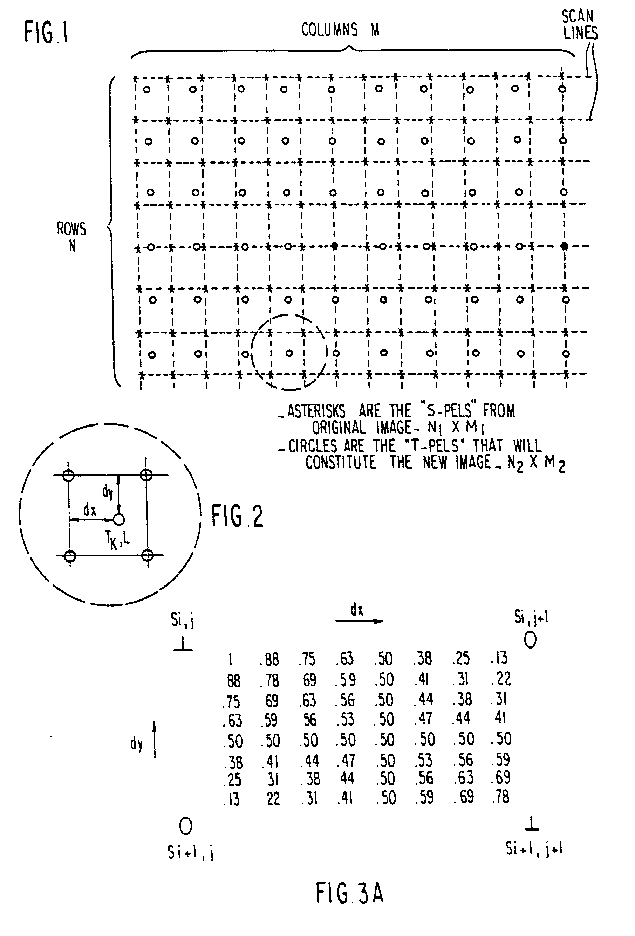

Referring now to Figure 1, there is shown the position of each pel in a scanned image field of the type specified in ICCTT standards which prescribe the number of pels per inch for each scanned line. In the simplified example shown a scan line consists of 14 pels each identified by an asterisk; the number of scan lines is 8. Those skilled in the art will recognise this to be a rudimentary example of an image field specified by 8 rows and 14 columns i.e. a matrix of 8 × 14. Each pel comprises digital data specifying the grey scale or intensity of a corresponding point in an original image. In the present example each pel is a single binary digit 0 or 1, where 0 corresponds to a dark intensity level and 1 to a bright intensity level.

Superimposed on the original image field of Figure 1 is a second image field of lower resolution comprising fewer pels than the first image field, each pel of the second image field being identified by a zero (0). The pels shown in the new image field are surrounded by the original image pels, *.

Referring to Figure 2, it is seen that each new pel $T_{K,L}$ is surrounded by four neighbour pels of the original matrix: $S_{i,j}$, $S_{i+1,j}$, $S_{i,j+1}$, and $S_{i+1, j+1}$. The image intensity of the new pel $T_{K,L}$ is a function of the position of the new image pel $T_{K,L}$ within the neighbourhood of original image pels and the intensity of the neighbour pels. The aforementioned prior art algorithm provides a means for calculating the new pel grey scale level as a result of considering the old image neighbourhood pel grey scale level.

The present embodiment provides for a convenient method, involving only a small amount of computation time, for assigning a new grey scale level to a new image pel given the grey scale levels of the four neighbours of the original image field, and the position of the new pel with respct to the old image neighbours.

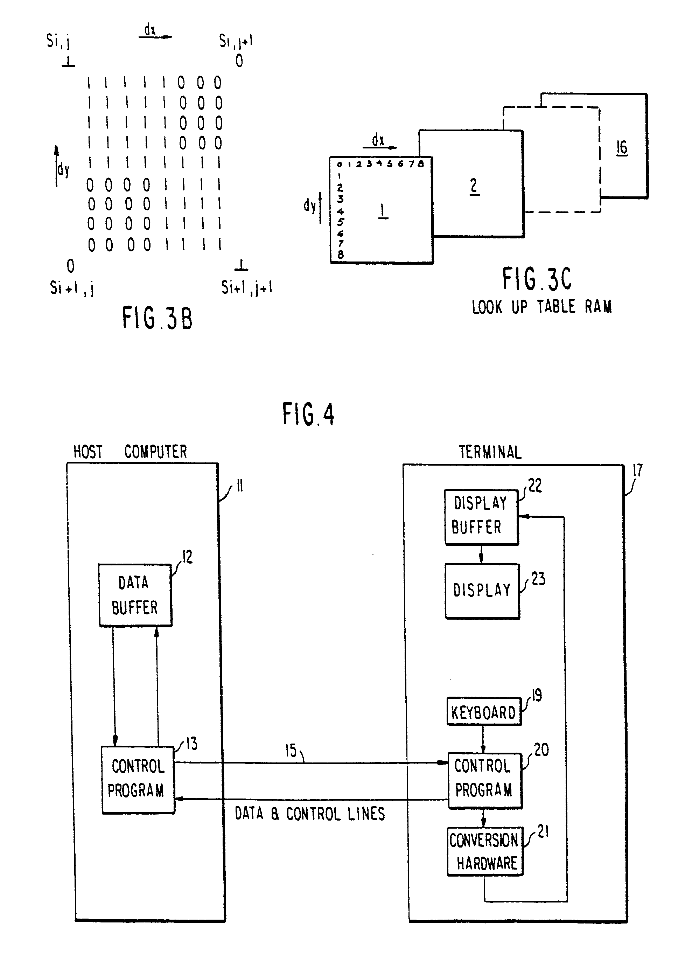

Referring to Figure 3A, there are shown, as a function of position, representative values of the grey scale of a new image pel derived from the contributions of the members of the old neighbourhood pels of an image to be converted. Figure 3A shows an 8 × 8 matrix of grey scale levels within a neighbourhood of original image pels which are assumed to be 1, 0, 0, 1 in this case. The distance dx represents the 8 different possible positions for a new pel in the horizontal direction within the neighbourhood, after rounding to the nearest $\frac{1}{8}$. The distance dy represents the 8 possible rounded positions of a new pel in the vertical direction. It is thus seen that the grey scale level for a new pel within the neighbourhood of Figure 3A may be conveniently identified by its position within the neighbourhood.

The values of grey scale for a new pel shown in Figure 3A may be rounded for convenience, whereby values of 0.5 or greater are indicated to be binary 1, and values of less than 0.5 are binary 0. Thus, Figure 3A may be modified to that shown in Figure 3B, wherein the grey scale of a new pel within the neighbourhood having four neighbours with grey scale levels of binary 1, 0, 0 and 1 may be represented by a 1 or 0. Since each neighbourhood comprises four pels, each having a binary value of 0 or 1, all possible neighbourhoods may be represented by a total of 16 matrices as shown in Figure 3C. In Figure 3C, each matrix such as that shown in Figure 3B is considered to be a plane, corresponding to a respective one of the sixteen possible neighbourhood patterns. The grey scale of a new pel within any neighbourhood so represented may be determined by considering its distances dx and dy within the plane, rounded to the nearest ⅛. Thus, by ascertaining the grey scale values of the four pel neighbours, and the position of the new pel within the neighbourhood, a new grey scale may be determined for the new pel within a neighbourhood. The sixteen planes of matrixes representing the sixteen possible neighbourhood configurations for the old image data comprise in the embodiment a look-up table which may be conveniently addressed to read out the grey scale of a new pel of an image matrix having a different resolution to the original image matrix. The look-up table is an addressable memory divided into planes with an 8 × 8 matrix of storage locations in each plane. The planes are addressed by the grey scale levels of the neighbourhood pels of the new pel, and within each plane a particular storage location is addressed by the rounded values dx and dy of the new pel.

Referring now to Figure 4 there is shown an overall block diagram of an apparatus for converting matrix image data of a first resolution, sent from a main frame host computer 11 via a bus 15 to a terminal 17, to a different resolution. The host computer 11 includes a data buffer 12 and control program 13 for controlling traffic to and from the terminal 17. Terminal 17 similarly includes a control program 20 which cooperates with the control program 13 to receive and send data to and from the host computer 11.

The terminal 17 is seen to contain a keyboard 19 for permitting user control of the terminal and permitting access to the host computer 11. A display 23 and display buffer 22 cooperate to present data generated by the keyboard and received from the data bus 15 for the user's information.

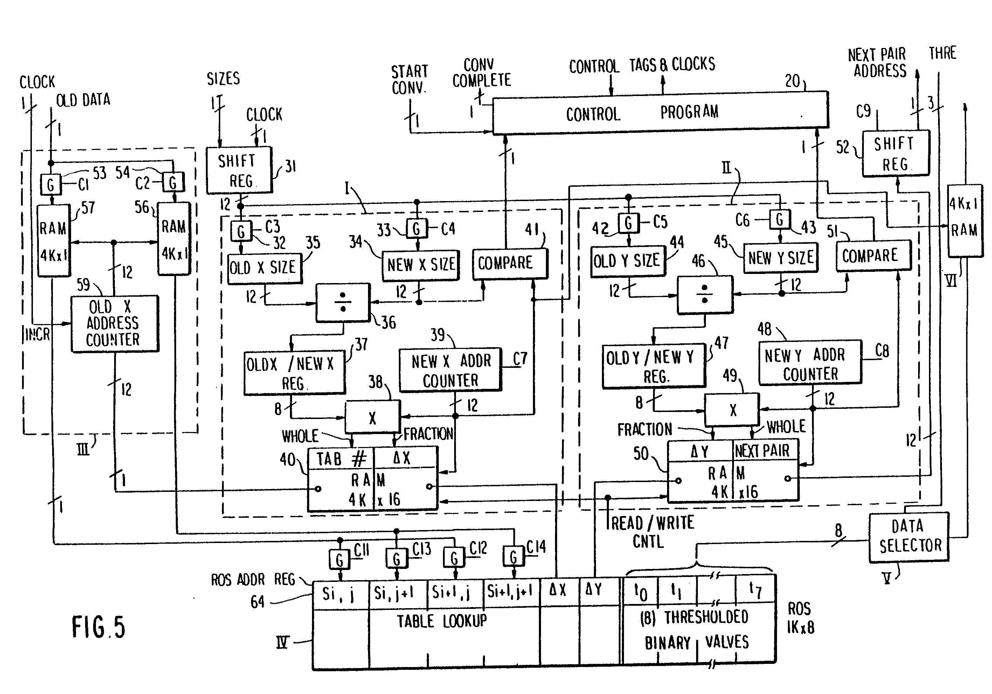

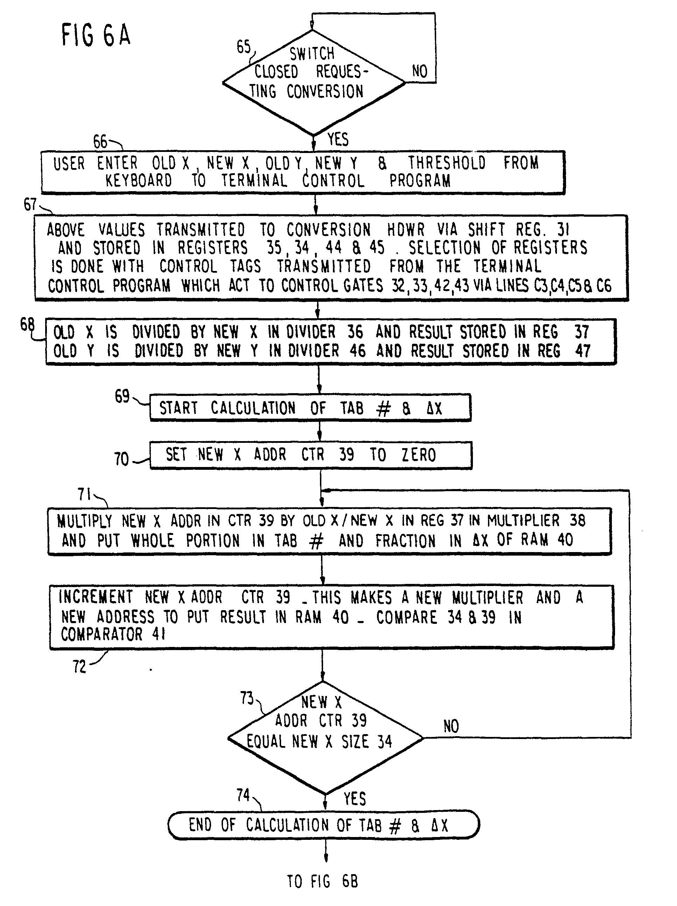

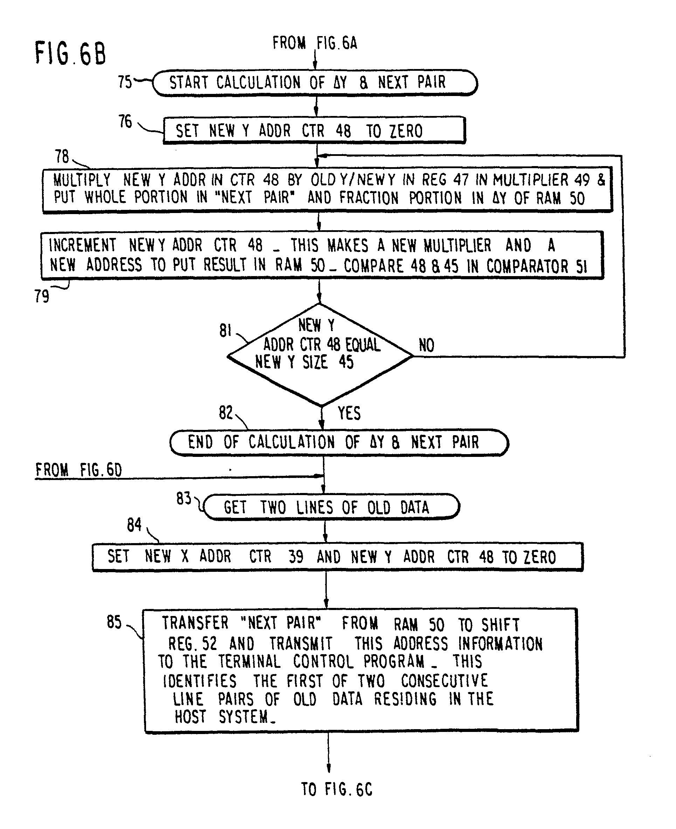

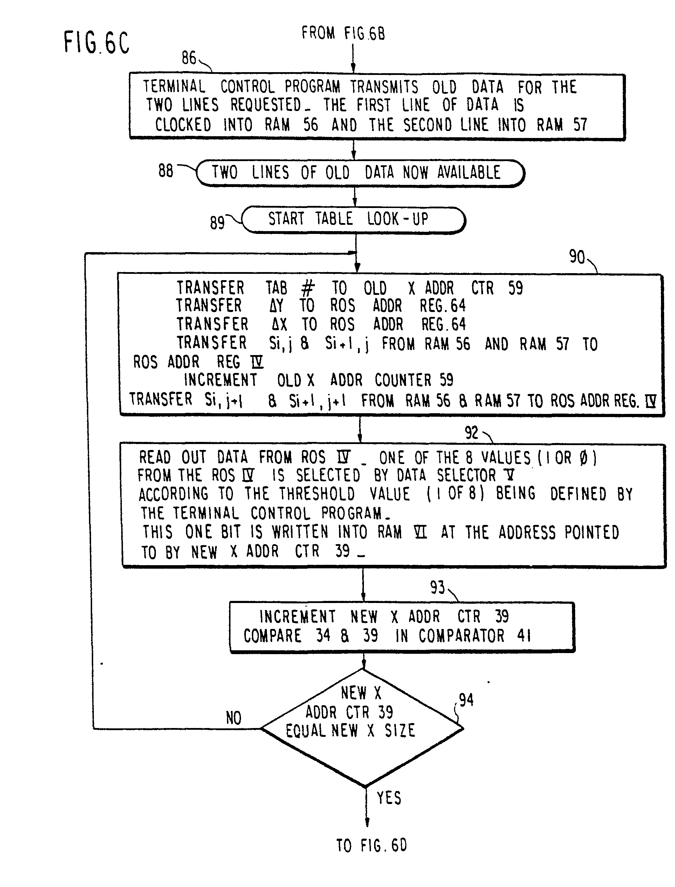

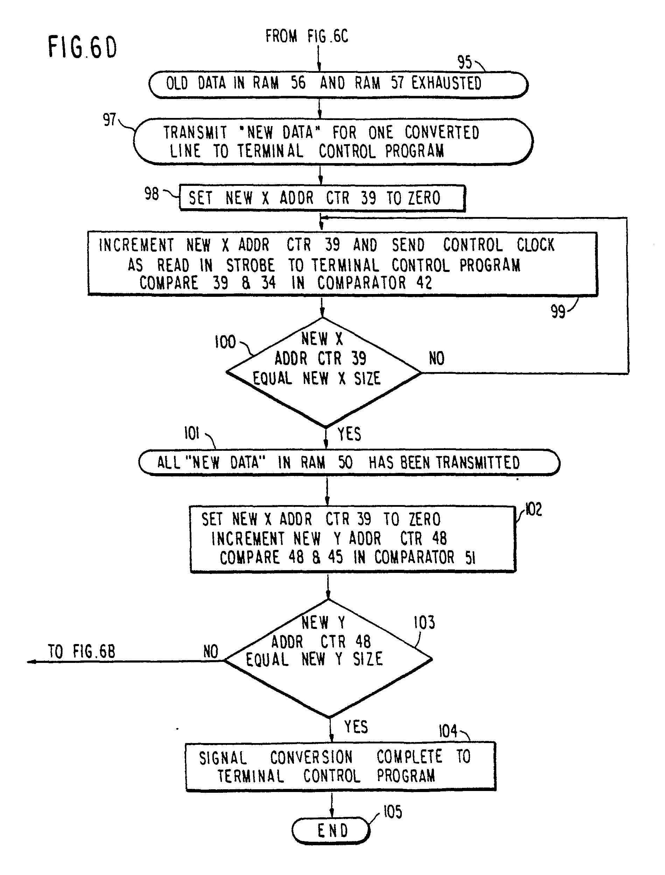

The terminal 17 includes conversion hardware 21 which will convert image data received from the data bus 15 from a first field size, containing $N_1 \times M_1$ pels, to a new image field of $N_2 \times M_2$ pels. The conversion hardware 21 is shown more specifically in Figure 5. The system of Figure 5 will be described in general terms with respect to the subsystems I—VI. Following the description of these subsystems, an example of the operation of the apparatus will be described with respect to the flow charts of Figure 6.

Subsystems I and II compute the location of the four neighbour pels of the old image field $N_1 \times M_1$ for each new image pel of the field $N_2 \times M^2$. Initially there are stored the old X-size, new X-size, old Y-size, and new Y-size dimensions of the respective image fields in registers 34, 35, 44, 45 within subsystems I and II, the term "size" here referring to the numbers N and M and not being related to the physical dimensions of the ultimate picture displayed. Address counters 39 and 48 generate the address of each new pel to be displayed as the new image. Scaling factors are produced to scale the X dimension of the new image data to identify pel neighbours of the old image field which include the new image field pels. Floating point multipliers 38 and 49 produce the X coordinate and Y coordinates of the neighbours of the old image data containing the new image pel. Two random access memories 40 and 50 store the result of floating point multiplication of the scale factors and the respective X and Y addresses of the new image pels in columns. The result of each floating point multiplication is a whole number and a fraction number.

In subsystem II, the whole number (NEXT PAIR) in RAM 50 identifies each pair of rows in the old image data which contains neighbours of each new image pel. The fraction $\Delta Y$ resulting from the floating point multiplication is also stored in the memory 50 and locates the dy position of the new image pel with respect to the pair of rows identified by the corresponding whole number.

In subsystem I, memory 40 stores whole numbers shown as TAB# and the corresponding fraction $\Delta X$. The memory 40 identifies the pairs of columns of the old image pels which include a new image pel. $\Delta X$, the corresponding fraction, identifies the dx position between columns of the new image pel.

Thus, subsystem I and II identify the intersecting pairs of rows and columns of the old image data which includes each new image pel.

The stored whole numbers in RAM 50, located at addresses in RAM 50 corresponding to the Y address for each new pel, are used to address the stored old image data in data buffer 12, Figure 4, through shift register 52. The pair of rows identified at each address of memory 50 are sequentially inserted through gates 53 and 54 into RAMS 56 and 57. RAMS 56 and 57, along with address counter 59 and gates 53 and 54 comprise yet another subsystem III. The subsystem of III holds the pels of the identified row pairs, addressed by the shift register 52, until the four neighbours of each new image pel in the pair of rows have been identified and the grey scale contribution of the neighbours to the new image pel contained within the neighbourhood have been identified. Once the pair of old image data rows have been loaded in RAMS 56 and 57, address counter 59 addresses each column of old image pels in RAMS 56 and 57 which are identified in memory 40. The output from RAMS 56 and 57 comprise the neighbours $S_{i,j}$, $S_{i,j+1}$, $S_{i+1,j}$, $S_{i+1,\ j+1}$. The image data grey scale levels received from RAMS 56 and 57 address one of the plurality of planes contained in the look-up table IV. As each neighbourhood is addressed in RAMS 56 and 57, and the corresponding grey scales of the individual old pels of the neighbourhood produced for addressing a

plane, the $\Delta X$ and $\Delta Y$ values representing the position of each new image pel in a neighbourhood identifies within the plane so addressed the storage location corresponding to the position of the new pel with respect to the old image neighbour pels. Therefore, the look-up table produces a stored grey scale level having a value which is dependent upon the grey scale of the four individual old image neighbour pels, and the position of the new image pel within the neighbourhood.

Look-up table IV has associated with each memory location thereof eight binary values $t_0$ to $t_7$. The eight binary values, each representing a grey scale level of 1 or 0, are applied to a data selector V. Data selector V is under control of a threshold which is a three bit code used to select one of the $t_0$ to $t_7$ known values. In this way weighting of the grey scale is possible, i.e. the density of binary 1 values in the resulting image may be varied. In effect, therefore, eight look-up tables are provided corresponding respectively to $t_0$ as the grey scale level in each memory location, $t_1$ as the grey scale level in each memory location, and so on.

For any given image conversion the data selector V will normally select only one of the tables for providing the grey scale levels of the new image pels, according to the density of image required. RAM VI assembles the new image pel grey scale levels until one scan line is produced.

The control program 20 provides for the necessary signals to the different circuit components of Figure 5 to effect the foregoing operation. The system will now be described in terms of the actual steps carried on by the control program 20 to convert image data of a first size to a second size.

Referring now to Figures 6a—6d as well as Figure 5, there is shown the flow chart of the steps carried out by the apparatus of Figure 5. The initial step 65 includes a determination that the keyboard 19 has selected a request to convert the image data from data buffer 12 to an image of a different resolution. The user enters from the keyboard 19 in step 66 the old and new matrix sizes $N_1$, $M_1$ and $N_2$, $M_2$ of the image data. Alternately, the manual operator input could be supplanted by suitable programming so that the operation could occur automatically. The sizes of the respective image fields are loaded in shift register 31. Shift register 31 is clocked by pulses from the control program 20 to serially produce each of the old image X size $(M_1)$, new image X size $(M_2)$, old image Y size $(N_1)$, and new image Y size $(N_2)$ in serial fashion. Gates 32, 33, 42, and 43 are controlled by the control tags from the control program 20 to gate at the appropriate time the respective image dimension to one of registers 35, 34, 44 and 45.

Once the image sizes residue in the registers, dividers 36 and 46 produce scaling factors by dividing the old image size dimensions by the new image size dimensions in step 68. The result of the scale factor calculations for each coordinate direction of the matrices are stored in registers 37 and 47 respectively.

Address counters 39 and 48 are clocked by the control program 20 to generate sequentially the address of each of the new image pels of the new matrix. In steps 69—72 the scale factor contained in register 37 is multiplied by each of the new pel X addresses and the result is a whole number and a fraction, identified as TAB# and $\Delta X$ respectively. The result of the multiplication is stored at an address identified by the new X address counter 39 in RAM 40. As was mentioned previously, at the conclusion of multiplying all of the new pel X addresses by the scale factor, memory 40 will contain TAB# at each new pel X address identifying the pair of columns of the old image data which form neighbours of the new image pel. When the address counter 39 has produced an address equal to the new X size as stored in register 34, the calculation of TAB# and $\Delta X$ coordinates is terminated in step 74. Thus, it is seen that step 71 through 74 complete the calculation of TAB# and $\Delta X$ coordinates for each new pel of the new image field and store the result in memory 40. It will be appreciated that TAB# and $\Delta X$ need only be calculated for one line or row of new image pels, as these values will be identical for succeeding rows.

The control program 20 provides a subsequent set of control signal for calculating the pairs of rows of old image data, NEXT PAIR, and the $\Delta Y$ coordinate of each new pel within the old image data in steps 75 through 81. The new Y address counter 48 is set to 0 in step 76. Each of the subsequent Y addresses produced in response to clock pulses C8 are multiplied by the scale factor contained in register 47 by floating point multiplier 49. When the new Y address counter 48 has incremented to an address having a width of the new Y size contained in register 45, comparator 51 will terminate the calculation of $\Delta Y$ and the next pair whole number, NEXT PAIR. Memory 50 contains at each new Y address the respective NEXT PAIR rows of old image data which constitute neighbours, and the position within the rows $\Delta Y$ of the new image pel. As for the X direction, it is only necessary to calculate NEXT PAIR and $\Delta Y$ for one column of the new image pels.

In step 82, the complete calculation of each new Y address of NEXT PAIR and $\Delta Y$ is completed.

Now that both memories 40 and 50 contain the identification of the columns and rows of the neighbours of the old image data for each new image pel, the first pair of lines of old image data is in step 83 identified by referring to the first memory location in memory 50. The NEXT PAIR identified in memory 50 is inserted in shift register 52 in step 85. Shift register 52 transmits the address information to the terminal control program 20. The control program 20 calls forth the proper two consecutive lines of old image data residing in the host computer system 11 which includes neighbours of the new image pel. The control program 20 transmits the pair of lines requested into RAMS 56 and 57. RAM 56 contains the first of the pair of lines and RAM 57 contains the second of the pair of lines. In step 88, the two lines of old image data which contain neighbours of the new image pel are thus available.

The further identification of the neighbours begins in steps 89 and 90, wherein each TAB# in the RAM 40 identifies the columns of neighbours stored in RAMS 57 and 56. Old X address counter 59 addresses these columns of neighbours as each TAB# is read out from memory 40. The output of RAMS 57 and 56 therefore contain the image pels comprising neighbours $S_{i,j}$ and $S_{i+1,j}$. The old X address counter 59 is incremented by 1 and the neighbours $S_{i,j+1}$, and $S_{i+1, j+1}$ are read for the RAMS 56 and 57.

Thus, the four neighbours of a new pel are identified, and applied through gates under control of control program 20 to the look-up table IV. Look-up table IV is arranged in planes, each of the planes corresponding to the grey scale of the four neighbours. The individual planes of the look-up table 4 are further addressed by $\Delta X$ and $\Delta Y$ which identify the position of each new pel within the neighbourhood of pels addressing the plane. In step 92, the eight possible binary values produced from the look-up table 4 are selected by data selector V under control of the control program 20. A threshold value is used to discriminate against grey scales above and below a predetermined number, between 0 and 1, which may be set by the operation via the keyboard, a potentiometer or switch, or by a program. The result from the data selector V is one of eight possible grey scale levels which is stored in RAM VI as the grey scale of a pel, RAM VI under control of the address counter 39 will for each new X address produced, which has identified the neighbourhood of a pel, store the grey scale level at the new X address. In step 93, the loading of RAM VI is found to be complete when the new X address counter has an X address which is equal to the new X size.

The decision block 94 when determining that the last new pel X address has been generated and a corresponding grey scale for a pel at the address identified is stored in RAM VI, indicates that the data in RAMS 56 and 57 has been completely processed. The line of new image pels assembled in RAM VI is transmitted to the terminal control program 20 for use by the display buffer. The new address counter is set to 0 in step 98, and then incremented in step 99. In decision block 100, the new X address is compared with the new X size, and the X address counter 39 is continued to be incremented until the decision block 100 provides a yes indication.

At this time, step 101 indicates that all the new data in the RAM VI has been sent to the program controller, and in step 102 the new X address counter 39 is reset to 0. The new Y address counter is incremented and once again compared with the Y dimension of the new image matrix. If there is not an equivalence found, further Y addresses are produced, and the flow chart returns to step 83 to get two more lines of old data for storage in RAMS 56 and 57. The process is completed when both the Y counters and X counters have completely addressed every new pel in the new image field, and RAM VI has assembled each of the lines of the new image field and transmitted the same to the program controller for the users display buffer. A signal indicating that the data has been completely converted is produced in step 104 for use by the control programmer.

Thus, it is seen that by using a look-up table considerable computation time is saved when image data is produced.

## Claim

Apparatus for converting first image data, comprising a matrix of rows and columns of image pels each comprising grey scale data of a corresponding point on an original image, to a matrix of second image data of reduced resolution, the apparatus comprising:

means (34 to 37) for forming a first scale factor corresponding to the ratio of the resolution of the first image to that of the second image in the row direction,

means (44 to 47) for forming a second scale factor corresponding to the ratio of the resolution of the first image to that of the second image in the column direction,

means (38, 39) for multiplying the row coordinate of each successive column of second image pels by the first scale factor to give, in each case, a whole number TAB# and a fractional remainder "X,

means (40) for storing each successive TAB# and "X,

means (48, 49) for multiplying the column coordinate of each successive row of second image pels by the second scale factor to give, in each case, a whole number NEXT PAIR and a fractional remainder "Y,

means (50) for storing each successive NEXT PAIR and "Y,

means (52 to 54, 56, 57, 59) responsive to the stored values of TAB#, "X and NEXT PAIR, " to identify, for each different combination of TAB# and NEXT PAIR, a set of four first image pels which constitute the nearest neighbours to a respective second image pel, and

a look-up table (64) which is accessed in respect of each set of four first image pels so identified at a location determined by the combination of grey scale values of the four first image pels and by the remainders "X and "Y associated with the whole numbers TAB# and NEXT PAIR from which the four first image pels were identified, such location having stored therein the grey scale level of the respective second image pel.

## Patentanspruch

Vorrichtung zur Umwandlung erster Bilddaten, mit einer Matrix aus Zeilen und Spalten von Bildelementen, die jeweils Grauskalendaten eines entsprechenden Punktes einer Bildvorlage umfassen, in eine Matrix von zweiten Bilddaten verminderter Auflösung, wobei die Vorrichtung

Mittel (34—37) zur Bildung eines ersten Normierungsfaktors, der dem Verhältnis der Auflösung des ersten Bildes zu derjenigen des zweiten Bildes in Zeilenrichtung entspricht,

Mittel (44—47) zur Bildung eines zweiten Normierungsfaktors, der dem Verhältnis der Auflösung des ersten Bildes zu derjenigen des zweiten Bildes in Spaltenrichtung entspricht,

Mittel (38, 39) zur Multiplizierung der Zeilencoordinate einer jeden aufeinanderfolgenden Spalte von zweiten Bildelementen mit dem ersten Normierungsfaktor, wobei sich in jedem Fall eine ganze Zahl TAB# und ein Bruchteilsrest $\Delta X$ ergibt,

Mittel (40) zur Speicherung eines jeden aufeinanderfolgenden TAB# und $\Delta X$,

Mittel (48, 49) zur Multiplizierung der Spaltenkoordinate einer jeden aufeinanderfolgenden Zeile von zweiten Bildelementen mit dem zweiten Normierungsfaktor, wobei sich in jedem Fall eine ganze Zahl NEXT PAIR und ein Bruchteilsrest $\Delta Y$ ergibt,

Mittel (50) zur Speicherung eines jeden aufeinanderfolgenden NEXT PAIR und $\Delta Y$,

Mittel (52—54, 56, 57, 59), welche auf die gespeicherten Werte von TAB#, $\Delta X$ und NEXT PAIR, $\Delta Y$ ansprechen, zur Identifizierung, für jede verschiedene Kombination von TAB# und NEXT PAIR, eines Satzes aus vier ersten Bildpunkten, welche die nächsten Nachbarn zu einem betreffenden zweiten Bildpunkt bilden, und

eine Nachschlagtabelle (64), auf welche in Bezug auf jeden Satz von so identifizierten vier ersten Bildelementen an einem Platz zugegriffen wird, der durch die Kombination von Grauskalenwerten der vier ersten Bildelemente und durch die den ganzen Zahlen TAB# und NEXT PAIR, aus welchen die vier ersten Bildelemente identifiziert worden sind, zugeordneten Resten $\Delta X$ und $\Delta Y$ bestimmt ist, wobei an einem solchen Platz der Grauskalenwert des betreffenden zweiten Bildelements gespeichert ist, umfaßt.

**Revendication**

Appareil de conversion de premières données d'image, constituant une matrice de rangées et de colonnes d'éléments d'image consistant chacun en des données d'échelle des gris d'un point correspondant sur une image initiale en une matrice de secondes données d'image de résolution réduite, l'appareil comportant: un dispositif (34 à 37) pour former un premier facteur multiplicateur correspondant au rapport entre la résolution de la première image et celle de la seconde image dans la direction des rangées, un dispositif (44 à 47) pour former un second facteur multiplicateur correspondant au rapport entre la résolution de la première image et celle de la seconde image dans la direction des colonnes, un dispositif (38, 39) destiné à multiplier les coordonnées de rangées de chaque colonne successive des seconds éléments d'image par le premier facteur multiplicateur pour obtenir dans chaque cas un nombre entier TAB# et un reste fractionnaire $\Delta X$, un dispositif (40) pour mémoriser chaque TAB# et $\Delta X$ successifs, un dispositif (48, 49) pour multiplier les coordonnées de colonnes de chaque rangée successive de seconds éléments d'image par le second facteur multiplicateur pour obtenir dans chaque cas un nombre entier NEXT PAIR et un reste fractionnaire $\Delta Y$, un dispositif (50) pour mémoriser chaque NEXT PAIR et $\Delta Y$ successifs, un dispositif (52 à 54, 56, 57, 59) réagissant aux valeurs mémorisées de TAB#, $\Delta X$ et NEXT PAIR, $\Delta Y$ pour identifier, pour chaque combinaison différente de TAB# et NEXT PAIR, un ensemble de quatre premiers éléments d'image qui constituent les voisins les plus proches d'un second élément d'image, et une table de consultation (64) à laquelle l'accès est donné par rapport à chaque ensemble de quatre premiers éléments d'image identifiés à une position déterminée par la combinaison de valeurs d'échelle des gris des quatre premiers éléments d'image et par les restes $\Delta X$ et $\Delta Y$ associés avec les nombres entiers TAB# et NEXT PAIR à partir desquels les quatre premiers éléments d'image ont été identifiés, dans cette position étant mémorisé le niveau d'échelle des gris du second élément respectif.

FIG.1

COLUMNS M

SCAN LINES

ROWS N

_ASTERISKS ARE THE "S-PELS" FROM ORIGINAL IMAGE_ $N_1 \times M_1$
_CIRCLES ARE THE "T-PELS" THAT WILL CONSTITUTE THE NEW IMAGE_ $N_2 \times M_2$

FIG.2

$T_{K,L}$

dy

dx

| $S_{i,j}$ ⊥ | dx → | | | | | | $S_{i,j+1}$ ○ |
|---|---|---|---|---|---|---|---|
| 1 | .88 | .75 | .63 | .50 | .38 | .25 | .13 |
| .88 | .78 | 69 | .59 | .50 | .41 | .31 | .22 |
| .75 | 69 | .63 | .56 | .50 | .44 | .38 | .31 |
| .63 | .59 | 56 | .53 | .50 | .47 | .44 | .41 |
| .50 | .50 | .50 | .50 | .50 | .50 | .50 | .50 |
| .38 | .41 | .44 | .47 | .50 | .53 | .56 | .59 |
| .25 | 31 | .38 | .44 | .50 | .56 | .63 | 69 |
| .13 | .22 | .31 | .41 | .50 | .59 | 69 | .78 |

dy ↑

$S_{i+1,j}$ ○

$S_{i+1,j+1}$ ⊥

FIG.3A

$S_{i,j}$     $\overset{dx}{\longrightarrow}$     $S_{i,j+1}$

$\perp$                       0

```
1 1 1 1 1 0 0 0
1 1 1 1 1 0 0 0
1 1 1 1 1 0 0 0
1 1 1 1 1 0 0 0
1 1 1 1 1 1 1 1
0 0 0 0 0 1 1 1
0 0 0 0 0 1 1 1
0 0 0 0 0 1 1 1
0 0 0 0 1 1 1 1
```

$\uparrow dy$

0                     $\perp$

$S_{i+1,j}$           $S_{i+1,j+1}$

**FIG.3B**

**FIG.3C**

LOOK UP TABLE RAM

# FIG.4

FIG. 5

3

0 105 707

FIG 6A

65 — **SWITCH CLOSED REQUESTING CONVERSION** — NO

YES

66 — USER ENTER OLD X , NEW X , OLD Y , NEW Y  &  THRESHOLD  FROM KEYBOARD  TO  TERMINAL  CONTROL  PROGRAM

67 — ABOVE VALUES TRANSMITTED  TO CONVERSION  HDWR  VIA SHIFT REG. 31 AND STORED IN REGISTERS  35 , 34 , 44 & 45 . SELECTION  OF REGISTERS IS DONE WITH  CONTROL TAGS  TRANSMITTED  FROM THE  TERMINAL CONTROL PROGRAM WHICH ACT TO CONTROL GATES 32 , 33 , 42 , 43 VIA LINES C3, C4, C5 & C6

68 — OLD  X  IS  DIVIDED  BY  NEW  X  IN DIVIDER  36  AND RESULT STORED IN REG  37 OLD  Y  IS  DIVIDED  BY  NEW  Y  IN DIVIDER  46  AND RESULT STORED IN REG  47

69 — START  CALCULATION  OF  TAB # & $\Delta$X

70 — SET  NEW  X  ADDR  CTR  39  TO  ZERO

71 — MULTIPLY  NEW  X  ADDR IN CTR 39 BY OLD X / NEW  X  IN REG 37 IN MULTIPLIER 38 AND  PUT  WHOLE  PORTION  IN TAB #  AND FRACTION  IN $\Delta$X OF RAM 40

INCREMENT  NEW X ADDR   CTR  39  _ THIS MAKES A NEW MULTIPLIER  AND  A NEW  ADDRESS TO PUT  RESULT IN RAM 40 _ COMPARE 34 & 39  IN COMPARATOR 41

72 —

73 — **NEW X ADDR CTR 39 EQUAL NEW X SIZE 34** — NO

74 — YES

END OF  CALCULATION OF TAB # & $\Delta$X

TO FIG 6B

4

**FIG.6B**

FROM FIG.6A

75 — START CALCULATION OF ΔY & NEXT PAIR

76 — SET NEW Y ADDR CTR 48 TO ZERO

78 — MULTIPLY NEW Y ADDR IN CTR 48 BY OLD Y/NEW Y IN REG 47 IN MULTIPLIER 49 & PUT WHOLE PORTION IN "NEXT PAIR" AND FRACTION PORTION IN ΔY OF RAM 50

INCREMENT NEW Y ADDR CTR 48 — THIS MAKES A NEW MULTIPLIER AND A NEW ADDRESS TO PUT RESULT IN RAM 50 — COMPARE 48 & 45 IN COMPARATOR 51

79

81 — NEW Y ADDR CTR 48 EQUAL NEW Y SIZE 45      NO

82 — END OF CALCULATION OF ΔY & NEXT PAIR

YES

FROM FIG.6D

83 — GET TWO LINES OF OLD DATA

84 — SET NEW X ADDR CTR 39 AND NEW Y ADDR CTR 48 TO ZERO

85 — TRANSFER "NEXT PAIR" FROM RAM 50 TO SHIFT REG.52 AND TRANSMIT THIS ADDRESS INFORMATION TO THE TERMINAL CONTROL PROGRAM — THIS IDENTIFIES THE FIRST OF TWO CONSECUTIVE LINE PAIRS OF OLD DATA RESIDING IN THE HOST SYSTEM.

TO FIG.6C

5

0 105 707

FIG.6C

FROM FIG.6B

86 — TERMINAL CONTROL PROGRAM TRANSMITS OLD DATA FOR THE
TWO LINES REQUESTED. THE FIRST LINE OF DATA IS
CLOCKED INTO RAM 56 AND THE SECOND LINE INTO RAM 57

88 — TWO LINES OF OLD DATA NOW AVAILABLE

89 — START TABLE LOOK-UP

90 —

TRANSFER    TAB #   TO   OLD   X ADDR   CTR 59
TRANSFER    ΔY   TO   ROS    ADDR   REG.64
TRANSFER    ΔX   TO   ROS    ADDR   REG.64
TRANSFER    $S_{i,j}$ &  $S_{i+1,j}$ FROM RAM 56  AND RAM 57  TO
ROS ADDR  REG IV
INCREMENT   OLD X   ADDR COUNTER 59
TRANSFER $S_{i,j+1}$   &  $S_{i+1,j+1}$ FROM RAM 56 & RAM 57 TO ROS ADDR REG. IV

92 —

READ  OUT DATA FROM ROS IV _ ONE OF THE 8 VALUES (1 OR 0)
FROM THE ROS IV  IS SELECTED  BY DATA SELECTOR V
ACCORDING TO THE THRESHOLD  VALUE (1 OF 8) BEING  DEFINED BY
THE TERMINAL CONTROL PROGRAM.
THIS ONE BIT IS WRITTEN INTO RAM VI AT THE ADDRESS POINTED
TO BY NEW X ADDR CTR 39 _

93 — INCREMENT NEW X ADDR CTR 39
COMPARE 34 & 39 IN COMPARATOR 41

NO — NEW X
ADDR CTR 39
EQUAL NEW X SIZE — 94

YES

TO FIG.6D

6

FIG.6D

FROM FIG.6C

OLD DATA IN RAM 56 AND RAM 57 EXHAUSTED — 95

97 — TRANSMIT "NEW DATA" FOR ONE CONVERTED LINE TO TERMINAL CONTROL PROGRAM

98 — SET NEW X ADDR CTR 39 TO ZERO

INCREMENT NEW X ADDR CTR 39 AND SEND CONTROL CLOCK AS READ IN STROBE TO TERMINAL CONTROL PROGRAM COMPARE 39 & 34 IN COMPARATOR 42 — 99

100 — NEW X ADDR CTR 39 EQUAL NEW X SIZE — NO

YES

101 — ALL "NEW DATA" IN RAM 50 HAS BEEN TRANSMITTED

SET NEW X ADDR CTR 39 TO ZERO INCREMENT NEW Y ADDR CTR 48 COMPARE 48 & 45 IN COMPARATOR 51 — 102

NEW Y ADDR CTR 48 EQUAL NEW Y SIZE — 103

TO FIG.6B ← NO

YES

104 — SIGNAL CONVERSION COMPLETE TO TERMINAL CONTROL PROGRAM

END — 105